# EUROPÄISCHE PATENTSCHRIFT

(11) **EP 2 801 509 B1**
(45) Veröffentlichungstag und Bekanntmachung des Hinweises auf die Patenterteilung: **01.03.2017**
(21) Anmeldenummer: 14166453.2
(22) Anmeldetag: 29.04.2014
(51) Int. Cl.: B62D 5/00, B62D 5/32, B62D 3/14, B66F 9/075

(54) **Mobile Arbeitsmaschine, insbesondere Flurförderzeug, mit einer elektrischen Lenkungseinrichtung**
Mobile work machine, in particular industrial truck, with an electric steering assembly
Machine de travail mobile, en particulier chariot de manutention, doté d'un mécanisme de direction électrique

(30) Priorität: 08.05.2013 DE 102013104794
(43) Veröffentlichungstag der Anmeldung: 12.11.2014
(73) Patentinhaber: STILL GmbH, 22113 Hamburg (DE)
(72) Erfinder: Tügel, Caspar, 20253 Hamburg (DE)
(74) Vertreter: Patentship Patentanwaltsgesellschaft mbH

(56) Entgegenhaltungen:
- DE-A1- 10 040 870
- DE-A1-102005 030 259
- DE-A1-102010 016 470
- DE-C1- 19 801 393

## Beschreibung

Die Erfindung betrifft eine als Flurförderzeug ausgebildete mobile Arbeitsmaschine mit einer elektrischen Lenkungseinrichtung, die ein in Abhängigkeit von einem Lenkgeber, insbesondere einem Lenkrad, betätigbares elektrisches Lenkelement zum Lenken zumindest eines gelenkten Rades umfasst, wobei eine elektronische Steuereinrichtung vorgesehen ist, die eingangsseitig mit einem die Betätigung des Lenkgebers erfassenden Lenkgebersensor und ausgangsseitig mit dem elektrischen Lenkelement zu dessen Ansteuerung in Wirkverbindung steht.

Aus der DE 10 2005 030 259 A1 ist ein elektrohydraulisches Lenksystem mit einer hydraulischen Rückfallebene eines Kraftfahrzeugs bekannt. Die hydraulische Rückfallebene umfasst einen hydraulischen Pumpmotor, der von dem Lenkrad betätigt wird und in einem Notbetrieb den Hydraulikdruck zur Beaufschlagung eines den lenkbaren Rädern zugeordneten Stellzylinders erzeugt.

Bei mobilen Arbeitsmaschinen sind verschiedene Lenkkonzepte bekannt.

Es ist bereits bekannt, zwischen dem Lenkgeber, in der Regel einem von einer Bedienperson betätigten Lenkrad, und dem zu lenkenden Rad bzw. den zu lenkenden Rädern eine mechanische Lenkübertragung vorzusehen. Die mechanische Lenkübertragung besteht beispielsweise aus einem Gestänge oder einer Kette, wobei weiterhin eine elektrische oder hydraulische Servounterstützung vorgesehen werden kann, um geringe Bedienkräfte an dem Lenkgeber zu erzielen. Die mechanische Lenkübertragung verursacht jedoch durch die mechanische Verbindung des Lenkgebers mit dem zu lenkenden Rad bzw. den zu lenkenden Rädern einen hohen Bauaufwand und einen hohen Bauraumbedarf.

Darüber hinaus ist es bereits bei mobilen Arbeitsmaschinen bekannt, Lenkungen ohne mechanische Verbindung zwischen dem Lenkgeber und dem gelenkten Rad bzw. den gelenkten Rädern einzusetzen.

Hierzu ist es bereits bekannt, die Lenkungseinrichtung von mobilen Arbeitsmaschinen als hydrostatische Lenkungseinrichtung, gegebenenfalls mit hydraulischer Servounterstützung, auszuführen. Eine derartige hydrostatische Lenkungseinrichtung mit hydraulischer Servounterstützung weist ein Lenkaggregat auf, das von dem Lenkgeber betätigt ist und eine Geberpumpe als Messpumpe sowie ein Servoventil als Lenkventil für die hydraulische Lenkkraftunterstützung umfasst. Die Geberpumpe und das Servoventil sind hierbei baulich zu dem Lenkaggregat zusammengefasst und an dem Lenkgeber bzw. einer mit dem Lenkgeber verbundenen Lenksäule angebaut, so dass die Geberpumpe und das Servoventil direkt durch die Lenkbewegung des Lenkgebers gesteuert werden. Das Servoventil steuert die Beaufschlagung eines hydraulischen Aktuators mit Druckmittel von einer Druckmittelquelle, um die Fremdkraftunterstützung und somit die Servounterstützung mit dem von einer Druckmittelquelle erzeugten Hydraulikdruck zu erzielen. Der hydraulische Aktuator ist in der Regel als Hydraulikzylinder oder Hydraulikmotor ausgeführt und steht zur Betätigung mit dem zu lenkenden Rad bzw. den zu lenkenden Räder in Wirkverbindung. Die von dem Lenkgeber mechanisch betätigte Geberpumpe ermöglicht bei einem Ausfall einer das Servoventil versorgenden Druckmittelquelle, beispielsweise einer die Lenkungseinrichtung versorgenden Hydropumpe, einen Notlenkbetrieb.

Bei derartigen hydrostatischen Lenkungseinrichtung weist jedoch das von der Geberpumpe und dem Servoventil gebildete Lenkaggregat einen hohen Bauraumbedarf auf und führt bei einer Anordnung an dem Lenkgeber zu einer Einschränkung der Beinfreiheit in einem Fahrerarbeitsplatz der Arbeitsmaschine, die insbesondere das Ein- und Aussteigen der Bedienperson in den Fahrerarbeitsplatz erschwert. Bei einer Betätigung des Lenkaggregats durch eine mit dem Lenkgeber in Verbindung stehenden Lenksäule ist eine Anordnung des Lenkaggregats unterhalb einer Bodenplatte des Fahrerarbeitsplatzes möglich. Die Lenksäule mit einer entsprechenden Betätigungswelle zur Betätigung des Lenkaggregats durch den Lenkgeber führt jedoch ebenfalls zu einer Einschränkung der Beinfreiheit für die Bedienperson, da die Lenksäule aus Kostengründen in der Regel ohne Umlenkung ausgeführt wird. Um eine verbesserte Beinfreiheit für den Aus- und Einstieg der Bedienperson zu erzielen und eine Behinderung des Aus- und Einstiegs durch die Lenksäule für die Bedienperson zu verringern, wird daher die Lenksäule als verstellbare bzw. verschwenkbare Lenksäule ausgebildet. Dabei hat es sich jedoch gezeigt, dass von der Bedienperson die verstellbare Lenksäule mit dem Lenkgeber oftmals weiter vorn eingestellt wird als ergonomisch optimal wäre. Ein weiterer Nachteil bekannter hydrostatischer Lenkungseinrichtungen besteht darin, dass an das Lenkaggregat eine hohe Anzahl von Druckmittelleitungen angeschlossen ist. Bekannte Lenkaggregate weisen zumindest vier an das Lenkaggregat angeschlossene Druckmittelleitungen auf, nämlich eine mit einer Pumpe in Verbindung stehende Druckmittelleitung, eine mit einem Behälter verbundene Druckmittelleitung und zwei zu dem hydraulischen Aktuator geführte Druckmittelleitungen. Bei einer Ausführung der hydraulischen Lenkungseinrichtung als Load-Sensing gesteuerte Lenkungseinrichtung ist zusätzlich zu diesen vier Druckmittelleitungen eine Lastdruckmeldeleitung an das Lenkaggregat angeschlossen. Diese hohe Anzahl von an das Lenkaggregat angeschlossenen Druckmittelleitungen vergrößert den Bauraumbedarf weiterhin und stellt aufgrund der Steifigkeit der Druckmittelleitungen für eine Verstellung bzw. Verschwenkung des Lenkrades bzw. der Lenksäule, um das Lenkrad in eine ergonomisch günstige Arbeitsposition einstellen zu können, ein großes Hindernis dar. Bei bekannten hydrostatischen Lenkungseinrichtungen ist das von der Geberpumpe und dem Servoventil bestehende Lenkaggregat weiterhin in unmittelbarer Nähe der Bedienperson der mobilen Arbeitsmaschine angeordnet. Die von dem Lenkaggregat emittierten hydraulischen Geräusche werden daher von der Bedienperson als störend empfunden.

Um die Nachteile von hydrostatischen Lenkungseinrichtungen hinsichtlich der als störend empfundenen Geräusche und hinsichtlich der Beschränkungen der Beinfreiheit der im Fahrerarbeitsplatz befindlichen Bedienperson sowie der Behinderungen beim Aus- und Einstieg der Bedienperson in den Fahrerarbeitsplatz zu vermeiden, ist es bereits bekannt, die Lenkungseinrichtung von mobilen Arbeitsmaschinen als elektrische Lenkungseinrichtung auszuführen.

Elektrische Lenkungseinrichtungen sind als voll-elektrische Lenkungseinrichtung bekannt. Bei derartigen voll-elektrischen Lenkungseinrichtungen ist zur Erfassung der Betätigung des Lenkgebers an dem Lenkgeber ein elektrischer Lenkgebersensor angebaut, der mit einer elektronischen Steuereinrichtung in Wirkverbindung steht. Die elektronische Steuereinrichtung steuert ein elektrisches Lenkelement an, das in der Regel als Elektromotor ausgeführt ist, und mit dem das zu lenkende Rad bzw. die zu lenkenden Räder gelenkt wird. Bei einer Ausbildung der Lenkungseinrichtung als Regelung ist zusätzlich zu dem als Sollwertsensor ausgeführten, an dem Lenkgeber angeordneten Lenkgebersensor an dem elektrischen Aktuator bzw. dem gelenkten Rad ein Lenkwinkelsensor als Istwertgeber erforderlich zur Erfassung und Rückmeldung des Lenkeinschlags des gelenkten Rades an die elektronische Steuereinrichtung.

Zudem ist es bereits bekannt, die elektrische Lenkungseinrichtung von mobilen Arbeitsmaschinen als elektro-hydraulische Lenkungseinrichtung auszuführen. Bei einer derartigen elektro-hydraulischen Lenkungseinrichtung ist zur Erfassung der Betätigung des Lenkgebers an dem Lenkgeber ein elektrischer Lenkgebersensor als Sollwertsensor angebaut, der mit einer elektronischen Steuereinrichtung in Wirkverbindung steht. Die elektronische Steuereinrichtung steuert ein elektrisches Lenkelement an, das in der Regel von einem elektrisch betätigbaren, hydraulischen Lenkventil gebildet ist, mit dem die Beaufschlagung eines hydraulischen Nehmeraktuators mit Druckmittel gesteuert wird. Der hydraulische Nehmeraktuator ist in der Regel als Hydraulikzylinder oder Hydraulikmotor ausgeführt und steht zur Betätigung mit dem zu lenkenden Rad bzw. den zu lenkenden Räder in Wirkverbindung. Bei einer Ausbildung als Regelung ist zusätzlich zu dem als Sollwertsensor ausgeführten Lenkgebersensor an dem Lenkgeber an dem hydraulischen Aktuator bzw. dem gelenkten Rad ein Lenkwinkelsensor als Istwertgeber erforderlich zur Erfassung und Rückmeldung des Lenkeinschlags des gelenkten Rades an die elektronische Steuereinrichtung.

Da bei derartigen, als voll-elektrischen oder elektro-hydraulischen Lenkungen ausgebildeten elektrischen Lenkungseinrichtungen an dem Lenkgeber lediglich der elektrische Lenkgebersensor angebaut ist, ergeben sich keine als störend empfundenen Geräusche und eine hohe Beinfreiheit für die im Fahrerarbeitsplatz befindliche Bedienperson. Weiterhin wird der Aus- und Einstieg der Bedienperson in den Fahrerarbeitsplatz verbessert.

Ein wesentlicher Nachteil einer voll-elektrischen Lenkungseinrichtung sowie einer elektro-hydraulischen Lenkungseinrichtung besteht jedoch darin, dass keine Notlenkungsfunktion gegeben ist, die bei einem Ausfall der die elektrischen bzw. elektronischen Komponenten versorgenden elektrischen Energiequelle einen weiteren Betrieb der voll-elektrische Lenkungseinrichtung bzw. der elektro-hydraulischen Lenkungseinrichtung ermöglicht. Eine derartige Notlenkungsfunktion ist jedoch für den Betrieb der Arbeitsmaschine auf öffentlichen Straßen erforderlich und gesetzlich vorgeschrieben. Für eine Notlenkungsfunktion ist bei derartigen elektrischen Lenkungseinrichtungen eine redundante und sichere elektrische Energieversorgung denkbar, die jedoch aufwändig ist und einen hohen Bauaufwand verursacht.

Der vorliegenden Erfindung liegt die Aufgabe zugrunde, ein Flurförderzeug mit einer elektrischen Lenkungseinrichtung der eingangs genannten Gattung zur Verfügung zu stellen, die mit geringem Bauaufwand mit einer Notlenkungsfunktion versehen ist ohne die Beinfreiheit in einem Fahrerarbeitsplatz und den Ein- und Ausstieg der Bedienperson in den Fahrerarbeitsplatz nachteilig zu beeinflussen.

Diese Aufgabe wird erfindungsgemäß dadurch gelöst, dass ein hydraulischer Notlenkkreis vorgesehen ist, der eine an dem Lenkgeber angeordnete und mit dem Lenkgeber trieblich verbundene Hydropumpe als Geberpumpe aufweist, die mit einem hydraulischen Nehmeraktuator verbunden ist, der zum Lenken des mindestens einen gelenkten Rades dient, wobei der hydraulische Notlenkkreis bei einem Ausfall der elektrischen Lenkungseinrichtung einen Lenkbetrieb des zumindest einen gelenkten Rades ermöglicht, wobei die Hydropumpe des Notlenkkreises als Zahnradpumpe, insbesondere Zahnringpumpe, ausgebildet ist und die Hydropumpe des hydraulischen Notlenkkreises und der elektrische Lenkgebersensor der elektrischen Lenkungseinrichtung koaxial an dem Lenkgeber unmittelbar benachbart zu einer den Lenkgeber drehbar lagernden Lenkgebernabe angeordnet sind.

Der erfindungsgemäße Gedanke besteht somit darin, der elektrischen Lenkungseinrichtung für die Notlenkungsfunktion einen parallelen hydraulischen Notlenkkreis zuzuordnen und somit die elektrische Lenkungseinrichtung mit einem hydraulischen Notlenkkreis zu kombinieren, mit dem bei einem Ausfall der elektrischen Lenkungseinrichtung über den hydraulischen Nehmeraktuator das gelenkte Rad bzw. die gelenkten Räder manuell gelenkt werden kann. Ein derartiger zusätzlicher hydraulischer Notlenkreis, der eine an dem Lenkgeber angeordnete und mit dem Lenkgeber trieblich verbundene Hydropumpe als Geberpumpe aufweist, die mit einem hydraulischen Nehmeraktuator zum Lenken des gelenkten Rades bzw. der gelenkten Räder verbunden ist, ist kostengünstig umsetzbar und weist einen geringen zusätzlichen Bauaufwand auf, so dass die elektrische Lenkungseinrichtung mit geringem Bauaufwand mit einer Notlenkungsfunktion versehen werden kann. Da bei dem hydraulischen Notlenkkreis lediglich eine klein bauende Geberpumpe direkt an dem Lenkgeber angeordnet ist und innerhalb des Fahrerarbeitsplatzes angeordnet ist und die Geberpumpe des Notlenkkreises unmittelbar unterhalb des Lenkgebers angeordnet werden kann, werden aufgrund des kleinen Bauvolumens der Geberpumpe weiterhin keine nachteilige Verringerung der Beinfreiheit des Fahrerarbeitsplatzes und keine nachteilige Beeinträchtigung des Ein- und Ausstiegs für eine Bedienperson in den Fahrerarbeitsplatz erzielt. Bei der erfindungsgemäßen elektrischen Lenkungseinrichtung mit dem zusätzlichen hydrostatischen Notlenkkreis, bei der der elektrische Lenkgebersensor der elektrischen Lenkungseinrichtung und die Geberpumpe des Notlenkkreises zusammen an dem Lenkgeber angeordnet sind, wird bei funktionsfähiger elektrischer Lenkungseinrichtung eine Betätigung des Lenkgebers von dem Lenkgebersensor erfasst und gleichzeitig die Geberpumpe betätigt, die einen Druckmittelstrom in dem hydrostatischen Notlenkkreis erzeugt, der proportional zur Betätigung des Lenkgebers ist und dessen Förderrichtung abhängig von der Drehrichtung des Lenkgebers ist. Mit der von dem Lenkgeber angetriebenen Geberpumpe ergibt sich somit eine handbetätigte hydrostatische Notlenkungsfunktion, die parallel zu der elektrischen Lenkungseinrichtung arbeitet und bei einem Ausfall der elektrischen Lenkungseinrichtung eine Notlenkungsfunktion ermöglicht.

Bei der Erfindung ist die Hydropumpe des Notlenkkreises als Zahnradpumpe, insbesondere Zahnringpumpe, ausgebildet. Derartige Zahnradmaschinen, beispielsweise eine auch als Gerotormaschine bezeichnete Zahnringmaschine, weisen eine flache Bauweise auf. Eine als Zahnradpumpe, bevorzugt als Zahnringpumpe, ausgebildete Hydropumpe des Notlenkkreises kann aufgrund der flachen Bauweise und des geringen Bauraumbedarfs auf einfache Weise unmittelbar unterhalb des Lenkgebers angeordnet werden, ohne die Beinfreiheit im Fahrerarbeitsplatz zu verringern oder den Ein- und Ausstieg der Bedienperson in den Fahrerarbeitsplatz zu behindern.

Die Hydropumpe des hydraulischen Notlenkkreises und der elektrische Lenkgebersensor der elektrischen Lenkungseinrichtung sind koaxial an dem Lenkgeber angeordnet unmittelbar benachbart zu einer den Lenkgeber drehbar lagernden Lenkgebernabe. Bei Verwendung einer klein bauenden Geberpumpe des Notlenkkreises wird es ermöglicht, die Geberpumpe des Notlenkkreises zusammen mit dem elektrischen Lenkgebersensor unmittelbar unterhalb des Lenkgebers anzuordnen, so dass mit geringem Bauaufwand ein Antrieb der Lenkgeberpumpe durch den Lenkgeber erzielt wird und keine Nachteile hinsichtlich der Beinfreiheit und des Ein-und Ausstiegs der Bedienperson in den Fahrerarbeitsplatz erzielt werden.

Gemäß einer vorteilhaften Ausführungsform der Erfindung ist der hydraulische Notlenkkreis als geschlossener Kreislauf ausgebildet, wobei die an dem Lenkgeber angeordnete und von dem Lenkgeber angetriebene Hydropumpe mit dem hydraulischen Nehmeraktuator im geschlossenen Kreislauf verbunden ist. Ein derartiger hydrostatischer Notlenkkreis mit einem geschlossenen Kreislauf zwischen der Geberpumpe und dem Nehmeraktuator weist einen einfachen und kostengünstigen Aufbau sowie eine hohe Betriebssicherheit auf, so dass ein betriebs- und funktionssicherer hydraulischer Notlenkkreis erzielt werden kann. Ein weiterer Vorteil des hydraulischen Notlenkkreises mit einem geschlossenen Kreislauf zwischen der Hydropumpe und dem Aktuator besteht darin, dass der geschlossenen Kreislauf lediglich aus zwei Druckmittelleitungen besteht, so dass an die an dem Lenkgeber angeordnete Geberpumpe des Notlenkkreises lediglich die beiden Druckmittelleitungen des geschlossenen Kreislaufs angeschlossen sind, die mit dem Nehmeraktuator des Notlenkreises verbunden sind. Die an die Geberpumpe angeschlossenen Druckmittelleitungen können hierbei als Schlauchleitungen oder Rohrleitungen ausgebildet sein. Durch die geringe Anzahl von Druckmittelleitungen an der an dem Lenkgeber angeordneten Geberpumpe ergibt sich ein geringer Bauraumbedarf des Notlenkreises im Bereich des Lenkgebers und des Fahrerarbeitsplatzes. Zudem kann durch die geringe Anzahl von Druckmittelleitungen an der Geberpumpe des Notlenkreises, die an dem Lenkgeber angeordnet ist, eine Verstellung und/oder Verschwenkung des Lenkgebers, um eine optimale ergonomische günstige Einstellung des Lenkgebers an die Bedürfnisse einer Bedienperson zu ermöglichen, mit geringem konstruktiven Bauaufwand umgesetzt werden.

Der hydraulische Nehmeraktuator des Notlenkkreises kann als Hydromotor oder Hydrozylinder ausgebildet sein. Entsprechend der Anzahl der gelenkten Räder der Arbeitsmaschine kann mit einem Hydromotor oder einem Hydrozylinder mit geringem Bauaufwand die Notlenkung des bzw. der gelenkten Räder erzielt werden.

Gemäß einer vorteilhaften Weiterbildung der Erfindung ist der geschlossene Kreislauf mit einer Überdruckabsicherungseinrichtung und/oder einer Nachsaugeeinrichtung und/oder einem Ausgleichsbehälter und/oder einem Speisekreis versehen. Der geschlossene Kreislauf des Notlenkreises kann somit mit geringem Bauaufwand gegen Überdruck und Füllungsmangel abgesichert werden sowie ein Volumenausgleich sichergestellt werden, um eine Funktionssicherheit des hydrostatischen Notlenkkreises zu gewährleisten.

Die elektrische Lenkungseinrichtung kann gemäß einer Ausführungsform der Erfindung als voll-elektrische Lenkungseinrichtung ausgebildet sein, bei der das elektrische Lenkelement als Elektromotor ausgebildet ist. Der hydraulische Nehmeraktuator des hydrostatischen Notlenkkreises, der als Hydromotor oder Hydrozylinder ausgebildet sein kann, kann hierbei mit dem Elektromotor in Wirkverbindung stehen oder mit dem gelenkten Rad oder den gelenkten Rädern in Wirkverbindung stehen, um bei einem Ausfall der elektrischen Lenkungseinrichtung die Notlenkungsfunktion zu ermöglichen.

Die elektrische Lenkungseinrichtung kann gemäß einer alternativen Ausführungsform der Erfindung als elektro-hydraulische Lenkungseinrichtung ausgebildet sein, bei der das elektrische Lenkelement als elektrisch betätigbares hydraulisches Lenkventil ausgebildet ist, das mit einer Druckmittelquelle, einem Behälter und einem hydraulischen Nehmeraktuator der elektro-hydraulischen Lenkungseinrichtung in Verbindung steht.

Bei einer derartigen elektro-hydraulische Lenkungseinrichtung sind hinsichtlich eines geringen zusätzlichen Bauaufwandes für die hydraulische Notlenkungsfunktion besondere Vorteile erzielbar, wenn gemäß einer Weiterbildung der Erfindung der hydraulische Nehmeraktuator des hydraulischen Notlenkkreises von dem hydraulischen Nehmeraktuator der elektro-hydraulischen Lenkungseinrichtung gebildet ist. Der bereits vorhandene und als Hydromotor bzw. Hydrozylinder ausgeführte, im Bereich des gelenkten Rades bzw. der gelenkten Räder angeordnete hydraulische Nehmeraktuator der elektro-hydraulischen Lenkungseinrichtung dient somit ebenfalls als Nehmeraktuator der hydraulischen Notlenkeinrichtung, so dass lediglich ein einziger hydraulischer Nehmeraktuator für die erfindungsgemäße elektrische Lenkungseinrichtung mit der hydraulischer Notlenkungsfunktion erforderlich ist. Durch entsprechende zusätzliche Ventile bzw. Ausbildung des elektrisch betätigbaren hydraulischen Lenkventils kann hierbei auf einfache Weise eine Beeinflussung der beiden hydraulischen Kreise der elektro-hydraulische Lenkungseinrichtung und des hydrostatischen Notlenkkreises verhindert werden.

Gemäß einer vorteilhaften Weiterbildung der Erfindung weist der hydraulische Notlenkkreis einen gegenüber der elektro-hydraulischen Lenkungseinrichtung verringerten Betriebsdruck auf. Sofern der Betriebsdruck des geschlossenen Kreislaufs des Notlenkreises ein geringeres Druckniveau aufweist wie der Betriebsdruck der elektro-hydraulischen Lenkungseinrichtung, können geringe Bedienkräfte an dem Lenkgeber während der Notlenkfunktion erzielt werden und der Bauaufwand für den hydraulischen Notlenkkreis verringert werden.

Bei der erfindungsgemäßen elektrischen Lenkungseinrichtung mit dem parallel arbeitenden hydrostatischen Notlenkkreis, bei dem bei einer Betätigung des Lenkgebers mittels des elektrischen Lenkgebersensor die Betätigung des Lenkgebers zur Ansteuerung und Betätigung des elektrischen Lenkelements erfasst und gleichzeitig die Geberpumpe einen Förderstrom im hydrostatischen Notlenkkreis fördert, stellt sich im normalen Betrieb bei funktionsfähiger elektrischer Lenkungseinrichtung in dem parallelen hydrostatischen Notlenkkreis lediglich ein minimaler hydraulischer Druck ein, so dass eine leichtgängige Bedienung des Lenkgebers erzielt wird. Bei einem Ausfall der elektrischen Lenkungseinrichtung steigt der Druck in dem hydrostatischen Notlenkkreises und das an dem Lenkgeber von der Bedienperson manuell aufzubringende Drehmoment an, um über den hydrostatischen Notlenkkreis das gelenkte Rad bzw. die gelenkten Räder lenken zu können. Durch diese Betriebsweise ist es möglich, den hydrostatischen Notlenkkreis auch bei funktionsfähiger elektrischer Lenkungseinrichtung aktiv und im Betrieb zu lassen.

Alternativ ist es möglich, gemäß einer Weiterbildung der Erfindung den Notlenkkreis mit einer Steuerungseinrichtung zu versehen, mittels der bei funktionsfähiger elektrischer Lenkungseinrichtung der Notlenkkreis deaktiviert ist und bei einem Ausfall der elektrischen Lenkungseinrichtung der Notlenkkreis aktiviert wird. Hierdurch wird es möglich, den Notlenkkreis nur dann zu aktivieren, wenn dieser bei einem Ausfall der elektrischen Lenkungseinrichtung für die Notlenkungsfunktion erforderlich ist.

Die Steuerungseinrichtung kann hierbei gemäß einer Ausführungsform eine die triebliche Verbindung des Lenkgebers mit der Hydropumpe steuernde Kupplungseinrichtung aufweisen, die von einer Federeinrichtung in eine drehmomentübertragende Verbindungsstellung betätigt ist und von einer elektrischen Betätigungseinrichtung in eine drehmomenttrennende Trennstellung betätigbar ist. Mit einer federbelasteten, elektrisch betätigbaren Kupplungseinrichtung kann mit geringem Bauaufwand bei funktionsfähiger elektrischer Lenkungseinrichtung durch Bestromen elektrischen Betätigungseinrichtung, beispielsweise eines Elektromagneten, der Kupplungseinrichtung die Geberpumpe zur Deaktivierung des Notlenkkreises von dem Lenkgeber trieblich getrennt werden und bei einem Stromausfall durch die Federeinrichtung automatisch mit der Kupplungseinrichtung eine triebliche Verbindung des Lenkgebers mit der Geberpumpe zur Aktivierung des Notlenkkreises erzielt werden.

Gemäß einer alternativen Ausgestaltungsform der Erfindung weist die Steuerungseinrichtung eine den Druckmittelleitungen des geschlossenen Kreislauf des Notlenkkreises zugeordnete Kurzschlussventileinrichtung auf, die von einer Federeinrichtung in eine erste Schaltstellung zum Absperren einer Kurzschlussverbindung des Notlenkkreises und von einer elektrischen Betätigungseinrichtung in eine zweite Schaltstellung zum Öffnen der Kurzschlussverbindung des Notlenkkreises betätigbar. Mit einer federbelasteten, elektrisch betätigbaren Kurzschlussventileinrichtung kann ebenfalls mit geringem Bauaufwand bei funktionsfähiger elektrischer Lenkungseinrichtung durch Bestromen der elektrischen Betätigungseinrichtung, beispielsweise eines Elektromagneten, die Kurzschlussventileinrichtung in die zweite Schaltstellung betätigt werden, in der die Geberpumpe bei geöffneter Kurschlussverbindung in einem drucklosen Umlauf betrieben wird und somit der Notlenkkreis deaktiviert ist, und bei einem Stromausfall durch die Federeinrichtung automatisch der drucklose Umlauf in der ersten Schaltstellung der Kurzschlussventileinrichtung abgesperrt werden, um bei einer Betätigung der Geberpumpe in dem geschlossenen Kreislauf einen Druck und Volumenstrom zur Betätigung des Nehmeraktuators aufbauen zu können und somit den Notlenkkreises zu aktivieren.

Gemäß einer besonders vorteilhaften Ausführungsform der Erfindung ist der mit der Geberpumpe versehene Lenkgeber in einem Fahrerarbeitsplatz der Arbeitsmaschine oberhalb eines Beinraums für eine Bedienperson angeordnet. Aufgrund der flachen Bauweise einer als Zahnradpumpe, bevorzugt als Zahnringpumpe, ausgeführten Geberpumpe kann die Geberpumpe des Notlenkkreises in den Bauraum oberhalb der Knie einer Bedienperson und somit oberhalb des Beinbereichs im Fahrerarbeitsplatz sowie unterhalb des Lenkgebers angeordnet werden. Gegenüber bekannten hydrostatischen Lenkungseinrichtungen, bei denen das von dem Servoventil und der Geberpumpe bestehenden Lenkaggregat unterhalb des Lenkrades angeordnet sind, kann bei der erfindungsgemäßen elektrischen Lenkungseinrichtung mit dem hydraulischen Notlenkkreis, wobei lediglich die Hydropumpe des hydraulischen Notlenkkreises unterhalb des Lenkgebers angeordnet ist, eine signifikant verbesserte Beinfreiheit für die Bedienperson erzielt werden und eine Behinderung des Bedienperson beim Aus- und Einstieg in den Fahrerarbeitsplatz vermieden werden.

Weitere Vorteile und Einzelheiten der Erfindung werden anhand der in den schematischen Figuren dargestellten Ausführungsbeispiele näher erläutert. Hierbei zeigt
- Figur 1: eine erfindungsgemäße, als Flurförderzeug ausgebildete mobile Arbeitsmaschine in einer Seitenansicht,
- Figur 2: einen Schaltplan einer ersten Ausführungsform einer erfindungsgemäßen Lenkungseinrichtung der Arbeitsmaschine
- Figur 3: eine erste Weiterbildung der Figur 2,
- Figur 4: eine zweite Weiterbildung der Figur 2 und
- Figur 5: einen Schaltplan einer zweiten Ausführungsform einer erfindungsgemäßen Lenkungseinrichtung der Arbeitsmaschine.

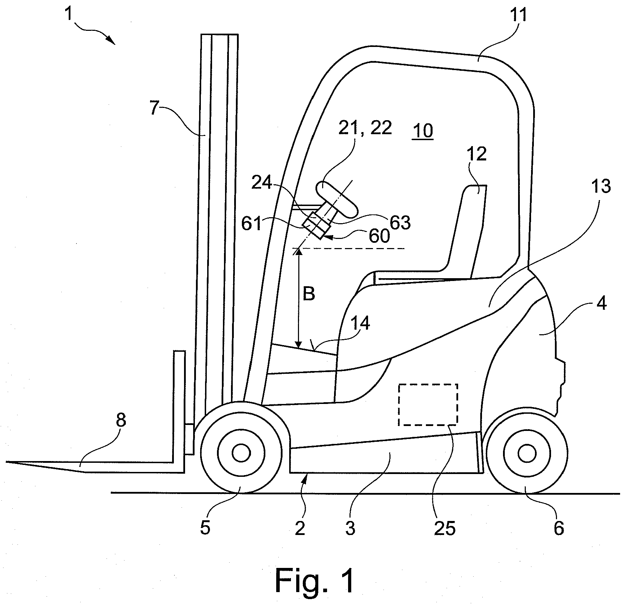

In der Figur 1 ist eine erfindungsgemäße, als Flurförderzeug ausgebildete mobile Arbeitsmaschine 1 dargestellt, das im vorliegenden Ausführungsbeispiel als Gegengewichtsgabelstapler ausbildet ist.

Das Flurförderzeug weist einen Fahrzeugkörper 2 auf, der von einem Fahrzeugrahmen 3 und einem im heckseitigen Bereich am Fahrzeugrahmen 3 angeordneten Gegengewicht 4 gebildet ist. Das Flurförderzeug stützt sich mit Vorderrädern 5, die bevorzugt mittels eines Fahrantriebs angetrieben sind, sowie mit zumindest einem als gelenktes Rad 6 ausgebildeten Hinterrad auf einer Fahrbahn ab.

Im frontseitigen Bereich ist weiterhin ein Hubgerüst 7 dargestellt, an dem ein Lastaufnahmemittel 8 annehmbar und absenkbar angeordnet ist.

Ein Fahrerarbeitsplatz 10 ist von einem auf dem Fahrzeugkörper 3 aufgesetzten Fahrschutzdach 11 begrenzt. In dem Fahrerarbeitsplatz 10 ist im dargestellten Ausführungsbeispiel ein Fahrersitz 12 für eine Bedienperson angeordnet. Der Fahrersitz 12 ist auf einer Haube 13 angeordnet, die einen innerhalb des Fahrzeugkörpers 2 ausgebildeten Aggregateraum nach oben abdeckt. Weiterhin ist eine Bodenplatte 14 dargestellt, auf die eine auf dem Fahrersitz 12 sitzende Bedienperson die Füße abstellen kann.

In dem Fahrerarbeitsplatz 10 sind die für die Bedienung des Flurförderzeugs durch die auf dem Fahrersitz 12 sitzende Bedienperson erforderlichen Bedienelemente angeordnet. Zu diesem gehören eine Fahrpedaleinrichtung zur Steuerung des Antriebs und einer Bremsanlage, sowie ein oder mehrere Bedienelemente zur Steuerung einer Arbeitshydraulik, mit der die Bewegungen des Lastaufnahmemittels 8 gesteuert werden können.

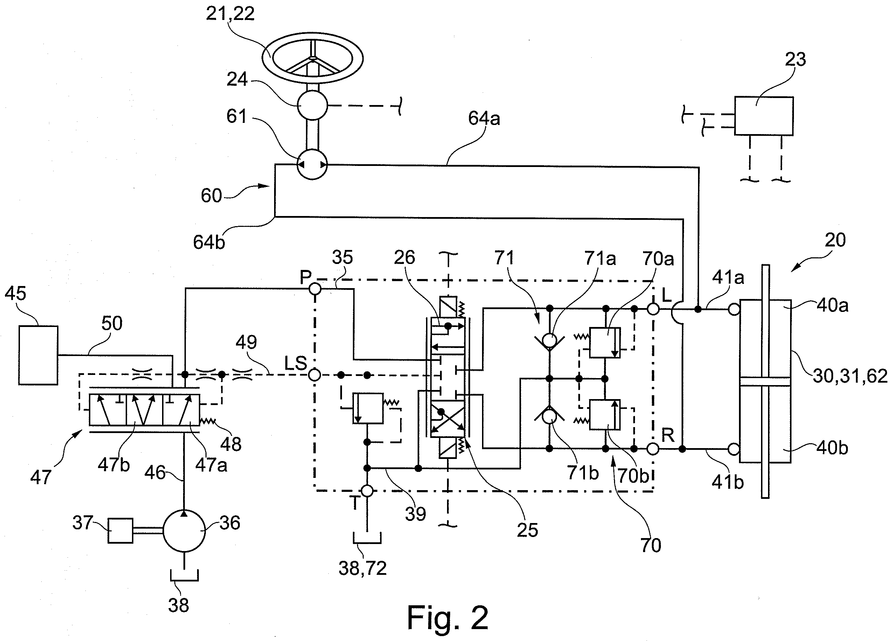

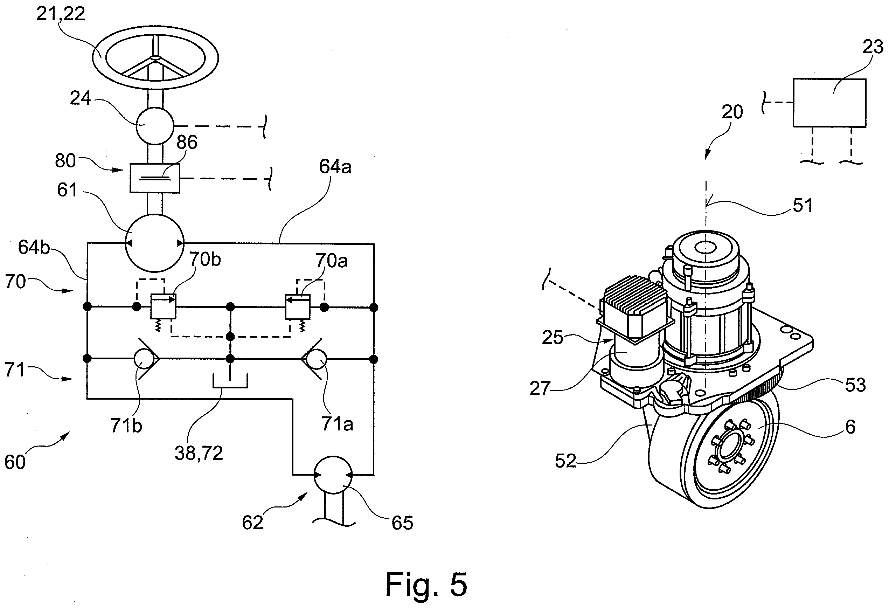

Das erfindungsgemäße Flurförderzeug ist zum Lenken des gelenken Rades 6 mit einer elektrischen Lenkungseinrichtung 20 versehen, deren Aufbau in dem Schaltplänen der Figuren 2 bzw. 5 näher dargestellt ist.

Die Figuren 2 bis 4 zeigen eine Ausführung der elektrischen Lenkungseinrichtung 20 als elektro-hydraulische Lenkungseinrichtung. Die Figur 5 zeigt eine Ausführung der elektrischen Lenkungseinrichtung als voll-elektrische Lenkungseinrichtung. Gleiche Bauteile sind hierbei mit gleichen Bezugsziffern versehen.

Gemäß den Figuren 2 bis 4 weist die erfindungsgemäße elektrische Lenkungseinrichtung 20 einen Lenkgeber 21 auf, der zur Betätigung durch die Bedienperson innerhalb des Fahrerarbeitsplatzes 10 angeordnet ist. Im dargestellten Ausführungsbeispiel ist der Lenkgeber 21 als Lenkrad 22 ausgebildet. Die elektrische Lenkungseinrichtung 20 weist eine elektronische Steuereinrichtung 23 auf, die eingangsseitig mit einem Lenkgebersensor 24 in Verbindung steht, mit dem die Betätigung des Lenkgebers 21 erfasst werden kann. Die elektronische Steuereinrichtung 23 steuert in Abhängigkeit von dem mittels des Lenkgebersensors 24 erfassten Betätigung des Lenkgebers 21 ein elektrisches Lenkelement 25 an, mittels dem das gelenkte Rad bzw. die gelenkten Räder gelenkt werden.

Bei der Ausführung der elektrischen Lenkungseinrichtung 20 als elektro-hydraulische Lenkungseinrichtung gemäß der Figuren 2 bis 4 ist das elektrische Lenkelement 25 von einem elektrisch betätigbaren Lenkventil 26 gebildet, dass zur Ansteuerung mit der elektronischen Steuereinrichtung 23 in Verbindung steht.

Bei der Ausführung der elektrischen Lenkungseinrichtung 20 als voll-elektrische Lenkungseinrichtung gemäß der Figur 5 ist das elektrisch Lenkelement 25 als ein einen Lenkmotor bildender Elektromotor 27 ausgebildet, der zur Ansteuerung mit der elektronischen Steuereinrichtung 23 in Verbindung steht und mit dem gelenkten Rad 6 in Wirkverbindung steht.

Gemäß den Figuren 2 bis 4 steuert das elektrisch ansteuerbare und betätigbare Lenkventil 26 einen hydraulischen Nehmeraktuator 30 an, der im dargestellten Ausführungsbeispiel als Hydraulikzylinder 31 ausgebildet ist und mit dem mindestens einen gelenkten Rad 6 zu dessen Lenkung in Wirkverbindung steht. Der Hydraulikzylinder 31 ist beispielsweise an einer Lenkachse der Arbeitsmaschine angeordnet.

Das Lenkventil 26 den Figuren 2 bis 4 ist an eine Förderleitung 35 einer als Hydraulikpumpe ausgebildeten hydraulischen Druckmittelquelle 36 angeschlossen, die von einem Antriebsmotor 37 angetrieben ist. Weiterhin ist das Lenkventil 26 an eine zu einem Behälter 38 geführte Behälterleitung 39 angeschlossen. Der als doppeltwirkender Lenkzylinder ausgebildete Hydraulikzylinder 31 ist als Gleichgangzylinder ausgebildet und weist einen ersten Steuerdruckraum 40a und einen zweiten Steuerdruckraum 40b auf. Der erste Steuerdruckraum 40a steht mittels einer ersten Druckmittelleitung 41 a und der zweite Steuerdruckraum 40b mittels einer zweiten Druckmittelleitung 41 b mit dem Lenkventil 26 in Verbindung. Bei einer Betätigung des Lenkventil 26 durch die elektronische Steuereinrichtung 23 bei einer mittels des Lenkgebersensors 24 erfassten Lenkanforderung wird von dem Lenkventil 26 in entsprechenden Steuerstellungen, die in den Figuren 2 bis 4 oben und unten dargestellt sind, ein hydraulischer Steuerpfad von der Hydraulikpumpe 36 zu dem Steuerdruckraum 40a bzw. 40b und von dem Steuerdruckraum 40b bzw. 40a zu dem Behälter 38 gesteuert, so dass das gelenkte Rad bzw. die gelenkten Räder entsprechend der Betätigung des Lenkgebers 21 gelenkt werden. In der dargestellten als federzentrierte Mittelstellung ausgebildeten Neutralstellung des Lenkventils 26 sind die Anschlüsse des Lenkventils 26 abgesperrt.

Die Hydraulikpumpe 36 dient im dargestellten Ausführungsbeispiel zur gleichzeitigen Versorgung einer Arbeitshydraulik 45 und der elektro-hydraulischen Lenkungseinrichtung 20 der Arbeitsmaschine.

Die Hydraulikpumpe 36 ist im offenen Kreislauf betrieben und saugt Druckmittel aus dem Behälter 38 an und fördert dieses in eine Förderleitung 46, in der zur bevorzugten Versorgung der Lenkungseinrichtung 20 ein Prioritätsventil 47 angeordnet ist. Von dem Prioritätsventil 47 führt die Förderleitung 35 zu dem Lenkventil 26 der Lenkungseinrichtung 20 als vorrangig mit Druckmittel versorgten Verbraucher. Das Prioritätsventil 47 ist bevorzugt mittels einer Feder 48 und dem in einer Lastdruckmeldeleitung 49 anstehenden Lastdruck der elektro-hydraulischen Lenkungseinrichtung 20 in Richtung einer die Förderleitung 46 mit der Förderleitung 35 zur bevorzugten Versorgung der Lenkungseinrichtung 20 verbindenden Stellung 47a beaufschlagbar. Der Abgriff des an dem Nehmeraktuator 30 anstehenden Lastdruckes, der in die Lastdruckmeldeleitung 49 gemeldet wird, erfolgt an dem Lenkventil 26. Mittels des in der Förderleitung 35 anstehenden Förderdruckes ist das Prioritätsventil 47 in Richtung einer Stellung 47b beaufschlagbar, in der die Förderleitung 46 mit der zur Lenkungseinrichtung 20 geführten Förderleitung 35 und einer zu der Arbeitshydraulik 45 geführten Förderleitung 50 verbunden ist.

Die Arbeitshydraulik 45 umfasst bei einem als Gabelstapler ausgebildeten Flurförderzeug mehrere hydraulische Verbraucher, beispielsweise einen Hubantrieb für das Lastaufnahmemittel 8, einen Neigeantrieb für das Hubgerüst 7 und in entsprechenden Varianten einen oder mehrere Zusatzverbraucher, beispielsweise eine Seitenschiebereinrichtung für das Lastaufnahmemittel 8.

Bei der Ausführungsform der Figur 5 ist das gelenkte Rad 6 an einem um eine vertikale Drehachse 51 schwenkbar angeordneten Lenkschemel 52 angeordnet. Der von der elektronischen Steuereinrichtung 23 angesteuerte, den Lenkmotor bildende Elektromotor 27 steht zum Lenken des gelenkten Rades 6 mit einem Zahnkranz 53 des Lenkschemels 52 in trieblicher Verbindung, beispielsweise über ein nicht näher dargestelltes Zahnritzel an einer Abtriebswelle des Elektromotors 27.

Bei der erfindungsgemäßen elektrischen Lenkungseinrichtung 20 gemäß den Figuren 2 bis 4 bzw. der Figur 5 ist erfindungsgemäß ein parallel zu der elektrischen Lenkungseinrichtung arbeitender hydraulischer Notlenkkreis 60 vorgesehen. Der hydraulische Notlenkkreis 60 weist eine an dem Lenkgeber 21 angeordnete und mit dem Lenkgeber 21 trieblich verbundene Hydropumpe 61 als Geberpumpe auf, die mit einem hydraulischen Nehmeraktuator 62 verbunden ist, der zum Lenken des mindestens eines gelenkten Rades 6 dient. Der hydraulischer Notlenkkreis 60 ermöglicht somit bei einem Ausfall der elektrischen Lenkungseinrichtung 20 einen Lenkbetrieb des zumindest einen gelenkten Rades 6 durch die manuelle Betätigung des Lenkgebers 21.

Die Hydropumpe 61 des hydraulischen Notlenkkreises 60 und der elektrische Lenkgebersensor 24 der elektrischen Lenkungseinrichtung 20 sind - wie in Verbindung mit der Figur 1 näher ersichtlich ist - koaxial an dem Lenkgeber 21 angeordnet. Bevorzugt sind die Hydropumpe 61 und der Lenkgebersensor 24 unmittelbar benachbart zu einer den Lenkgeber 21 drehbar lagernden Lenkgebernabe 63 unterhalb des Lenkgebers 21 angeordnet.

Die Hydropumpe 61 ist bevorzugt als flach bauende Zahnradpumpe, insbesondere Zahnringpumpe, ausgebildet. Der mit der Hydropumpe 61 und dem elektrischen Lenkgebersensor 24 versehene Lenkgeber 21 ist in dem Fahrerarbeitsplatz 10 angeordnet. Der mit der Hydropumpe 61 und dem elektrischen Lenkgebersensor 24 versehene Lenkgeber 21 ist hierbei in dem Fahrerarbeitsplatz 10 in vertikaler Richtung oberhalb eines durch die gestrichelte Linie verdeutlichten Beinraums B einer auf dem Fahrersitz 12 sitzenden Bedienperson angeordnet.

Der zusätzliche hydraulische Notlenkkreis 60 ist als geschlossener Kreislauf ausgebildet, wobei die an dem Lenkgeber 21 angeordnete und von dem Lenkgeber 21 angetriebene Hydropumpe 61 mit dem hydraulischen Nehmeraktuator 62 im geschlossenen Kreislauf verbunden ist. Der geschlossene Kreislauf ist von zwei Druckmittelleitungen 64a, 64b gebildet, mit denen der hydraulische Nehmeraktuator 62 des Notlenkreises 60 an die in beide Drehrichtungen betreibbare Hydropumpe 61 angeschlossen ist.

In den Figuren 2 bis 4 bildet der hydraulische Nehmeraktuator 30 der elektro-hydraulischen Lenkungseinrichtung 20 gleichzeitig den hydraulischen Nehmeraktuator 62 des Notlenkkreises 60. Die in beide Drehrichtungen betreibbare Geberpumpe 61 des Notlenkkreises 60 ist hierbei mittels der beiden Druckmittelleitungen 64a, 64b an den von dem elektrischen Lenkventil 26 gesteuerten hydraulischen Nehmeraktuator 30 angeschlossen. Die Druckmittelleitung 64a ist hierbei mit dem Steuerdruckraum 40a und die Druckmittelleitung 64b mit dem Steuerdruckraum 40b verbunden. Im dargestellten Ausführungsbeispiel ist die Druckmittelleitung 64a an die von dem Lenkventil 26 zu dem Steuerdruckraum 40a geführte Druckmittelleitung 41a und die Druckmittelleitung 64b an die von dem Lenkventil 26 zu dem Steuerdruckraum 40b geführte Druckmittelleitung 41 b angeschlossen.

In der Figur 5 ist der hydraulische Nehmeraktuator 62, der mittels der Druckmittelleitungen 64a, 64b an die Geberpumpe 61 im geschlossenen Kreislauf angeschlossen ist, als Hydromotor 65 ausgebildet, der auf nicht näher dargestellte Weise mit dem gelenkten Rad 6 zu dessen Lenkung in Wirkverbindung steht, beispielsweise über eine mit dem Zahnkranz 53 des Lenkschemels 52 in trieblicher Verbindung stehendes Zahnritzel an einer Abtriebswelle des Hydromotors 65.

Der geschlossene Kreislauf des Notlenkkreises 60 ist weiterhin mit einer Überdruckabsicherungseinrichtung 70 und/oder einer Nachsaugeeinrichtung 71 sowie einem von dem Behälter 38 gebildeten Ausgleichsbehälter 72 versehen. Die Überdruckabsicherungseinrichtung 70 besteht aus zwei den Druckmittelleitungen 64a, 64b zugeordneten Druckbegrenzungsventilen 70a, 70b. Die Nachsaugeeinrichtung 71 besteht aus den Druckmittelleitungen 64a, 64b zugeordneten Nachsaugeventilen 71a, 71 b. Die Druckbegrenzungsventile 70a, 70b stehen ausgangsseitig und die Nachsaugeventile 71a, 71 b eingangsseitig mit dem die Funktion eines Ausgleichsbehälters 72 aufweisenden Behälter 38 in Verbindung.

Bei den Figuren 2 bis 4 dient die Überdruckabsicherungseinrichtung 70 und/oder die Nachsaugeeinrichtung 71 durch die Verbindung mit den Druckmittelleitungen 41 a, 41 b weiterhin zur Absicherung des hydraulischen Kreislaufs der elektro-hydraulischen Lenkungseinrichtung 20.

Bevorzugt sind die Ventile der Überdruckabsicherungseinrichtung 70 und/oder der Nachsaugeeinrichtung 71 des geschlossenen Kreislaufs des hydraulischen Notlenkkreises 60 und das gegebenenfalls vorhandene Kurschlussventil 81 im Bereich des Nehmeraktuators 62 angeordnet, so dass an dem Lenkgeber 21 keine störende Geräusche verursachenden Ventile angeordnet sind.

Im normalen Betrieb bei funktionsfähiger elektrischer Lenkungseinrichtung 20 stellt sich in dem parallelen hydrostatischen Notlenkkreis 60 lediglich ein minimaler hydraulischer Druck ein, da bei einer Betätigung des Lenkgebers 21 von der elektronischen Steuereinrichtung 23 das elektrische Lenkelement 25 entsprechend der von dem Lenkgebersensor 24 erfassten Betätigung des Lenkgebers 21 angesteuert wird, um das gelenkte Rad 6 bzw. die gelenkten Räder zu lenken. Von der Hydropumpe 61 wird hierbei ein zur Betätigung des Lenkgebers 21 proportionaler und von der Betätigungsrichtung des Lenkgebers 21 abhängiger Förderstrom in dem geschlossenen Kreislauf des hydrostatischen Notlenkkreises 60 von einer auf die andere Seite des hydraulischen Nehmeraktuators 62 gefördert. Hierdurch wird im normalen Betrieb eine leichtgängige Bedienung des Lenkgebers 21 erzielt. Bei einem Ausfall der elektrischen Lenkungseinrichtung 20, beispielsweise infolge eines Stromausfalls, steigt bei einer Betätigung des Lenkgebers 21 der Druck in dem parallelen hydrostatischen Notlenkkreis 60 und das an dem Lenkgeber 21 von der Bedienperson manuell aufzubringende Drehmoment an, wobei über den parallelen hydrostatischen Notlenkkreis 60 das gelenkte Rad 6 bzw. die gelenkten Räder gelenkt werden können.

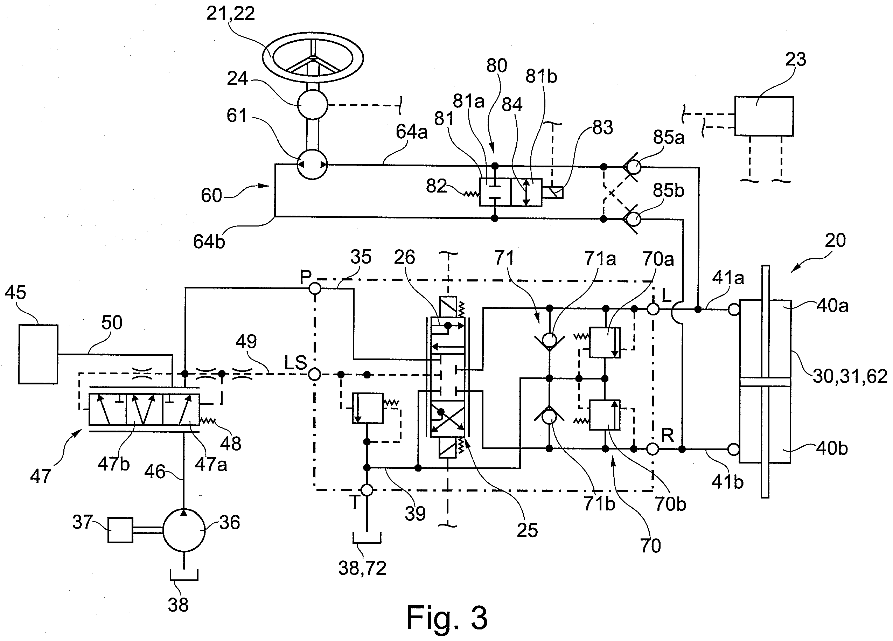

In den Figuren 3 bis 5 ist gemäß einer Weiterbildung der Erfindung der Notlenkkreis 60 mit einer Steuerungseinrichtung 80 versehen, mit der bei funktionsfähiger elektrischer Lenkungseinrichtung 20 der Notlenkkreis 60 deaktiviert ist und bei einem Ausfall der elektrischen Lenkungseinrichtung 20 der Notlenkkreis 60 automatisch aktiviert wird.

In der Figur 3 ist die Steuerungseinrichtung 80 von einer Kurzschlussventileinrichtung 81 gebildet, die den beiden Druckmittelleitungen 64a, 64b des geschlossenen Kreislaufs des Notlenkkreises 60 zugeordnet ist. Stromab des Anschlusses der Kurzschlussventileinrichtung 81 an die Druckmittelleitungen 64a, 64b ist in den Druckmittelleitungen 64a, 64b jeweils ein in Richtung zu dem hydraulischen Nehmeraktuator 62 öffnendes, aufsteuerbares Sperrventil 85a, 85b angeordnet. Die Sperrventil 85a, 85b sind im dargestellten Ausführungsbeispiel jeweils als vom Druck in der Gegenseite des geschlossenen Kreislaufs des Notlenkkreises 60 aufsteuerbares Sperrventil, beispielsweise Rückschlagventil, ausgebildet. Das in der Druckmittelleitung 64a angeordnete Sperrventil 85a ist über eine Steuerleitung von dem Druck in der Druckmittelleitung 64b in eine Durchflussstellung aufsteuerbar. Entsprechend ist das in der Druckmittelleitung 64b angeordnete Sperrventil 85b über eine Steuerleitung von dem Druck in der Druckmittelleitung 64a in eine Durchflussstellung aufsteuerbar. Die Kurzschlussventileinrichtung 81 ist von einer Federeinrichtung 82 in eine als Sperrstellung ausgebildete erste Schaltstellung 81 a, in der eine Kurzschlussverbindung 84 der Druckmittelleitungen 64a, 64b abgesperrt ist, und von einer elektrischen Betätigungseinrichtung 83, die zur Ansteuerung mit der elektronischen Steuereinrichtung 23 in Verbindung steht, in eine als Durchflussstellung ausgebildete zweite Schaltstellung 81 b betätigbar, in der eine Kurzschlussverbindung 84 der Druckmittelleitungen 64a, 64b geöffnet ist. Die Geberpumpe 61 wird somit in der Durchflussstellung 81 b in einem drucklosen Umlauf betrieben.

Im normalen Betrieb bei funktionsfähiger elektrischer Lenkungseinrichtung 20 ist die Kurzschlussventileinrichtung 81 durch Ansteuerung der Betätigungseinrichtung 83 in die zweite Schaltstellung 81 b betätigt, um durch die geöffnete Kurzschlussverbindung 84 den Notlenkkreis 60 zu deaktivieren. Bei einem Ausfall der elektrischen Lenkungseinrichtung 20, beispielsweise einem Stromausfall, wird die Kurzschlussventileinrichtung 81 automatisch von der Federeinrichtung 82 in die erste Schaltstellung 81a betätigt, um durch die abgesperrte Kurzschlussverbindung 84 den Notlenkkreis 60 zu aktivieren.

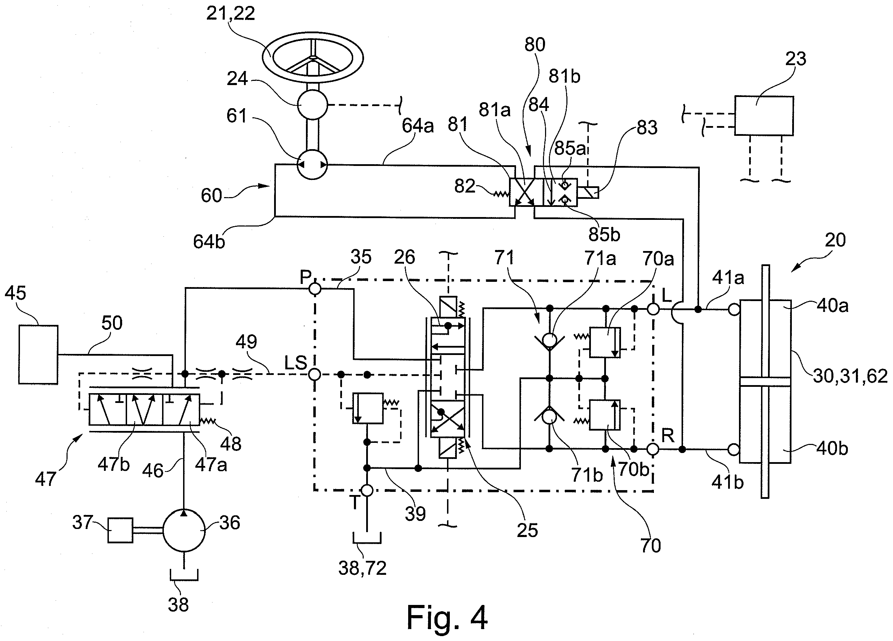

In der Figur 4 ist die Steuerungseinrichtung 80 ebenfalls von einer Kurzschlussventileinrichtung 81 gebildet, die den beiden Druckmittelleitungen 64a, 64b des geschlossenen Kreislaufs des Notlenkkreises 60 zugeordnet ist. Die Kurzschlussventileinrichtung 81 ist im dargestellten Ausführungsbeispiel als Vier-Anschluss-Zwei-Stellungs-Wege-Sitzventil ausgebildet. Die Kurzschlussventileinrichtung 81 ist von einer Federeinrichtung 82 in eine erste Schaltstellung 81a und von einer elektrischen Betätigungseinrichtung 83, die zur Ansteuerung mit der elektronischen Steuereinrichtung 23 in Verbindung steht, in eine zweite Schaltstellung 81b betätigbar. In der ersten Schaltstellung 81a sind die Druckmittelleitungen 64a, 64b und somit der geschlossenen Kreislauf des Notlenkkreises 60 geöffnet und ist die Geberpumpe 61 mit den Druckmittelleitungen 41 a, 41 b und somit dem Nehmeraktuator 30 verbunden. In der zweiten Schaltstellung 81 b sind die mit der Geberpumpe 61 in Verbindung stehenden Abschnitte der Druckmittelleitungen 64a, 64b mittels einer Kurzschlussverbindung 84 miteinander verbunden. Die Geberpumpe 61 wird somit in der zweiten Schaltstellung 81 b in einem drucklosen Umlauf betrieben. Die mit dem Nehmeraktuator 30 in Verbindung stehenden Abschnitte der Druckmittelleitungen 64a, 64b sind mittels jeweils eines Sperrventils 85, 85b, die im dargestellten Ausführungsbeispiel jeweils als Rückschlagventil ausgebildet ist, abgesperrt. In der ersten Schaltstellung 81 a ist somit die Kurzschlussverbindung 84 abgesperrt und somit der Notlenkkreis 60 aktiviert. In eine zweite Schaltstellung 81 b ist die Kurzschlussverbindung 84 geöffnet und somit der Notlenkkreis 60 deaktiviert.

Im normalen Betrieb bei funktionsfähiger elektrischer Lenkungseinrichtung 20 ist die Kurzschlussventileinrichtung 81 durch Ansteuerung der Betätigungseinrichtung 83 in die zweite Schaltstellung 81 b betätigt, um durch die geöffnete Kurzschlussverbindung 84 den Notlenkkreis 60 zu deaktivieren. Bei einem Ausfall der elektrischen Lenkungseinrichtung 20, beispielsweise einem Stromausfall, wird die Kurzschlussventileinrichtung 81 automatisch von der Federeinrichtung 82 in die erste Schaltstellung 81a betätigt, um durch die abgesperrte Kurzschlussverbindung 84 und die Verbindung der Geberpumpe 61 mit dem Nehmeraktuator 30 den Notlenkkreis 60 zu aktivieren.

In der Figur 5 ist die Steuerungseinrichtung 80 von einer die triebliche Verbindung des Lenkgebers 21 mit der Hydropumpe 61 steuernden Kupplungseinrichtung 86 gebildet. Die Kupplungseinrichtung 86 ist auf nicht näher dargestellte Weise von einer Federeinrichtung in eine drehmomentübertragende Verbindungsstellung betätigt und von einer elektrischen Betätigungseinrichtung, die zur Ansteuerung mit der elektronischen Steuereinrichtung 23 in Verbindung steht, in eine drehmomenttrennende Trennstellung betätigbar. Mit einer derartigen federbelasteten und elektrisch trennbaren Kupplungseinrichtung 86 wird ebenfalls erzielt, dass im normalen Betrieb bei funktionsfähiger elektrischen Lenkungseinrichtung 20 durch Ansteuerung der Betätigungseinrichtung die Kupplungseinrichtung 86 in die Trennstellung betätigt ist, um den Notlenkkreis 60 zu deaktivieren. Bei einem Ausfall der elektrischen Lenkungseinrichtung 20, beispielsweise einem Stromausfall, wird die Kupplungseinrichtung 86 automatisch von der Federeinrichtung in die Verbindungsstellung betätigt, um durch die Drehmomentverbindung zwischen dem Lenkgeber 21 und der Hydropumpe 61 den Notlenkkreis 60 zu aktivieren.

Die erfindungsgemäße voll-elektrische bzw. elektro-hydraulische Lenkungseinrichtung 20 mit dem parallelen hydraulischen Notlenkkreis 60 weist eine Reihe von Vorteilen auf.

Mit dem hydraulischen Notlenkkreis 60, der von der an dem Lenkgeber 21 angeordneten Hydropumpe 61 und dem im geschlossenen Kreislauf an die Hydropumpe 61 angeschlossenen hydraulischen Nehmeraktuator 62 gebildet ist, kann eine elektrische Lenkungseinrichtung 20 mit geringem zusätzlichen Bauaufwand und in kostengünstiger Weise mit einer Notlenkungsfunktion versehen werden, die einem Betrieb der mobilen Arbeitsmaschine auf öffentlichen Straßen ermöglicht. Der erfindungsgemäße hydraulische Notlenkkreis 60 kann weiterhin auf einfache Weise bei einer bestehenden elektrischen Lenkungseinrichtung 20 angebaut bzw. nachgerüstet werden, um bei einer elektrischen Lenkungseinrichtung 20 im Bedarfsfall eine Notlenkungsfunktion zu ermöglichen. Durch diese modulare Ausführung der erfindungsgemäßen Lenkungseinrichtung und optionalen Einbau des hydraulischen Notlenkkreises 60 wird es auf einfache Weise möglich, ohne Veränderungen an der elektrischen Lenkungseinrichtung im Bedarfsfall bei einer Arbeitsmaschine mit einer Straßenverkehrszulassung eine Notlenkungsfunktion der Arbeitsmaschine vorzusehen.

Bei einer flach bauenden Bauweise der Hydropumpe 61, beispielsweis einer als Zahnringpumpe ausgebildeten Zahnradpumpe, des Notlenkkreises 60 ist der Einbauraum im Fahrerarbeitsplatz 10 oberhalb des Beinraums B und unterhalb des Lenkgebers 21 für den Einbau der Hydropumpe 61 sowie des elektrischen Lenkgebersensors 24 ausreichend. Die unterhalb des Lenkgebers 21 angeordnete Hydropumpe 61 für die Notlenkungsfunktion führt somit zu keiner Beeinträchtigung des Beinraums B und der Beinfreiheit einer auf dem Fahrersitz 12 sitzenden Bedienperson und weiterhin zu keiner Beeinträchtigung der Bedienperson beim Aus- und Einsteigen der Bedienperson in den Fahrerarbeitsplatz 10.

Weiterhin sind an die Hydropumpe 61 des hydrostatischen Notlenkkreises 60 lediglich die beiden Druckmittelleitungen 64a, 64b des geschlossenen Kreislaufs angeschlossen, so dass sich ein geringer Platzbedarf für die Hydropumpe 61 und die Druckmittelleitungen 64a, 64b im Fahrerarbeitsplatz 10 ergibt, wodurch sich weitere Vorteile hinsichtlich der Beinfreiheit und des ungehinderten Aus- und Einstiegs der Bedienperson in den Fahrerarbeitsplatz 10 ergeben. Weiterhin kann durch die geringe Anzahl von Druckmittelleitungen 64a, 64b im Falle einer verstellbaren bzw. verschwenkbaren Anordnung des Lenkgebers 21 die Verstellung für die Verstellbewegungen und/oder Verschwenkbewegungen des Lenkgebers 21 konstruktiv einfach aufgebaut werden.

Ein weiterer Vorteil besteht darin, dass der hydrostatische Notlenkkreis 60 gegenüber bekannten hydrostatischen Lenkungseinrichtungen durch das Fehlen von an dem Lenkgeber 21 angeordneten Ventilen eine geringe Geräuschemissionen im Fahrerarbeitsplatz 10 aufweist. Sofern weiterhin der geschlossenen Kreislauf des Notlenkkreises 60 gemäß der Figur 5 zu der übrigen Hydraulikanlage der Arbeitsmaschine keinen direkten fluidischen Kontakt aufweist bzw. gemäß den Figuren 2 bis 4 von der übrigen Hydraulikanlage der Arbeitsmaschine weitestgehend getrennt ist, wird eine weitere Verringerung des Geräuschniveaus im Fahrerarbeitsplatz 10 erzielt.

Bei der erfindungsgemäßen Lenkungseinrichtung bleiben bei einer funktionsfähigen elektrischen Lenkungseinrichtung 20 mögliche Zusatzfunktionen der elektrischen Lenkungseinrichtung 20 vollständig erhalten, wie beispielsweise eine fahrzeugsituations- oder geschwindigkeitsabhängige Lenkübersetzung, ein Geradeausfahrtassistent oder eine automatische Kalibrierung der Lenkgeberstellung bezüglich der Geradeausfahrt sowie eine gegebenenfalls vorhandene, dosierte und situationsbezogene Kraftrückmeldung am Lenkgeber.

Die Erfindung ist nicht auf die dargestellten Ausführungsbeispiele beschränkt.

Die Figuren 2 bis 4 sind nicht auf den Anschluss der beiden Druckmittelleitungen 64a, 64b des Notlenkkreises 60 an die Druckmittelleitungen 41 a, 41 b beschränkt. Es ist alternativ möglich, die beiden Druckmittelleitungen 64a, 64b des Notlenkkreises 60 an das elektrisch betätigbare Lenkventil 26 anzuschließen. Durch geeignete Ausführung der Steuerstellungen des Lenkventils 26 kann im Betrieb eine Beeinflussung der beiden hydraulischen Kreise verhindert werden. Zudem ist denkbar, dass die Funktion der Steuerungseinrichtung 80 zum Aktivieren und Deaktivieren des Notlenkkreises 60 von dem Lenkventil 26 übernommen wird, indem beispielsweise in den beiden durch eine elektrische Ansteuerung eingenommenen Steuerstellungen des Lenkventils 26 die Druckmittelleitungen 64a, 64b des Notlenkkreises 60 in einem drucklosen Umlauf miteinander verbunden sind und lediglich in der federzentrierten Mittelstellung, die das Lenkventil 26 im Fehlerfall einnimmt, beispielsweise einem Stromausfall, die Druckmittelleitungen 64a, 64b des Notlenkkreises 60 mit den zu dem hydraulischen Nehmeraktuator 62 geführten Druckmittelleitungen 41 a, 41 b verbunden sind, um die Notlenkungsfunktion durch den hydraulischen Notlenkkreis 60 zu ermöglichen.

Bei den Figuren 2 bis 4 kann alternativ der hydraulische Nehmeraktuator 30, 62 als Hydromotor ausgebildet werden.

Bei der Figur 5 kann der hydraulische Nehmeraktuator 62 des Notlenkkreises 60 alternativ von einem Hydrozylinder gebildet werden, der beispielsweise über eine Zahnstange, die mit dem Zahnkranz 53 in Eingriff steht, die Notlenkungsfunktion des gelenkten Rades 6 ermöglicht.

Zudem versteht sich, dass die Steuerungseinrichtung 80 der Figur 3 bzw. 4 alternativ von einer Kupplungseinrichtung 86 gemäß der Figur 5 und die Steuerungseinrichtung 80 der Figur 5 alternativ von einer Kurzschlussventileinrichtung 81 gemäß der Figur 3 bzw. der Figur 4 gebildet werden kann.

Selbstverständlich kann die Figur 5 ohne eine Steuerungseinrichtung 80 ausgeführt werden.

## Patentansprüche

1. Mobile Arbeitsmaschine (1), die als Flurförderzeug ausgebildet ist, mit einer elektrischen Lenkungseinrichtung (20), die ein in Abhängigkeit von einem Lenkgeber (21), insbesondere einem Lenkrad (22), betätigbares elektrisches Lenkelement (25) zum Lenken zumindest eines gelenkten Rades (6) umfasst, wobei eine elektronische Steuereinrichtung (23) vorgesehen ist, die eingangsseitig mit einem die Betätigung des Lenkgebers (21) erfassenden Lenkgebersensor (24) und ausgangsseitig mit dem elektrischen Lenkelement (25) zu dessen Ansteuerung in Wirkverbindung steht, **dadurch gekennzeichnet, dass** ein hydraulischer Notlenkkreis (60) vorgesehen ist, der eine an dem Lenkgeber (21) angeordnete und mit dem Lenkgeber (21) trieblich verbundene Hydropumpe (61) als Geberpumpe aufweist, die mit einem hydraulischen Nehmeraktuator (62) verbunden ist, der zum Lenken des mindestens einen gelenkten Rades (6) dient, wobei der hydraulischer Notlenkkreis (60) bei einem Ausfall der elektrischen Lenkungseinrichtung (20) einen Lenkbetrieb des zumindest einen gelenkten Rades (6) ermöglicht, wobei die Hydropumpe (61) des Notlenkkreises als Zahnradpumpe, insbesondere Zahnringpumpe, ausgebildet ist und die Hydropumpe (61) des hydraulischen Notlenkkreises (60) und der elektrische Lenkgebersensor (24) der elektrischen Lenkungseinrichtung (20) koaxial an dem Lenkgeber (21) unmittelbar benachbart zu einer den Lenkgeber (21) drehbar lagernden Lenkgebernabe (63) angeordnet sind.

2. Mobile Arbeitsmaschine nach Anspruch 1, **dadurch gekennzeichnet, dass** der hydraulische Notlenkkreis (60) als geschlossener Kreislauf ausgebildet ist, wobei die an dem Lenkgeber (21) angeordnete und von dem Lenkgeber (21) angetriebene Hydropumpe (61) mit dem hydraulischen Nehmeraktuator (62) im geschlossenen Kreislauf verbunden ist.

3. Mobile Arbeitsmaschine nach Anspruch 1 oder 2, **dadurch gekennzeichnet, dass** der hydraulische Nehmeraktuator (62) des Notlenkkreises als Hydromotor (65) oder Hydrozylinder (31) ausgebildet ist.

4. Mobile Arbeitsmaschine nach einem der Ansprüche 1 bis 3, **dadurch gekennzeichnet, dass** der geschlossene Kreislauf mit einer Überdruckabsicherungseinrichtung (70) und/oder einer Nachsaugeeinrichtung (71) und/oder einem Ausgleichsbehälter (72) und/oder einem Speisekreis versehen ist.

5. Mobile Arbeitsmaschine nach einem der Ansprüche 1 bis 4, **dadurch gekennzeichnet, dass** die elektrische Lenkungseinrichtung (20) als voll-elektrische Lenkungseinrichtung ausgebildet ist, bei der das elektrische Lenkelement (25) als Elektromotor (27) ausbildet ist.

6. Mobile Arbeitsmaschine nach einem der Ansprüche 1 bis 4, **dadurch gekennzeichnet, dass** die elektrische Lenkungseinrichtung (20) als elektro-hydraulische Lenkungseinrichtung ausgebildet ist, bei der das elektrische Lenkelement (25) als elektrisch betätigbares hydraulisches Lenkventil (26) ausgebildet ist, das mit einer Druckmittelquelle (36), einem Behälter (38) und einem hydraulischen Nehmeraktuator (30) der elektro-hydraulischen Lenkungseinrichtung in Verbindung steht.

7. Mobile Arbeitsmaschine nach Anspruch 6, **dadurch gekennzeichnet, dass** der hydraulischer Nehmeraktuator (62) des hydraulischen Notlenkkreises (60) von dem hydraulischen Nehmeraktuator (31) der elektro-hydraulischen Lenkungseinrichtung gebildet ist.

8. Mobile Arbeitsmaschine nach Anspruch 6 oder 7, **dadurch gekennzeichnet, dass** der hydraulische Notlenkkreis (60) einen gegenüber der elektro-hydraulischen Lenkungseinrichtung (20) verringerten Betriebsdruck aufweist.

9. Mobile Arbeitsmaschine nach einem der Ansprüche 1 bis 8, **dadurch gekennzeichnet, dass** der Notlenkkreis (60) mit einer Steuerungseinrichtung (80) versehen ist, mittels der bei funktionsfähiger elektrischer Lenkungseinrichtung (20) der Notlenkkreis (60) deaktiviert ist und bei einem Ausfall der elektrischen Lenkungseinrichtung (20) der Notlenkkreis (60) aktiviert wird.

10. Mobile Arbeitsmaschine nach Anspruch 9, **dadurch gekennzeichnet, dass** die Steuerungseinrichtung (80) eine die triebliche Verbindung des Lenkgebers (21) mit der Hydropumpe(61) steuernde Kupplungseinrichtung (86) aufweist, die von einer Federeinrichtung in eine drehmomentübertragende Verbindungsstellung betätigt ist und von einer elektrischen Betätigungseinrichtung in eine drehmomenttrennende Trennstellung betätigbar ist.

11. Mobile Arbeitsmaschine nach Anspruch 9, **dadurch gekennzeichnet, dass** die Steuerungseinrichtung (80) eine den Druckmittelleitungen (64a, 64b) des geschlossenen Kreislauf des Notlenkkreises (60) zugeordnete Kurzschlussventileinrichtung (81) aufweist, die von einer Federeinrichtung (82) in eine erste Schaltstellung (81 a) zum Absperren einer Kurzschlussverbindung (84) des Notlenkkreises (60) und von einer elektrischen Betätigungseinrichtung (83) in eine zweite Schaltstellung (81 b) zum Öffnen der Kurzschlussverbindung (84) des Notlenkkreises (60) betätigbar ist.

12. Mobile Arbeitsmaschine nach einem der Ansprüche 1 bis 11, **dadurch gekennzeichnet, dass** der mit der Hydropumpe (61) versehene Lenkgeber (21) in einem Fahrerarbeitsplatz (10) der Arbeitsmaschine (1) oberhalb eines Beinraums (B) für eine Bedienperson angeordnet ist.

## Claims

1. Mobile work machine (1) which is embodied as an industrial truck, having an electric steering device (20) which comprises an electric steering element (25) which can be activated as a function of a steering encoder (21), in particular a steering wheel (22), and has the purpose of steering at least one steered wheel (6), wherein an electronic control device (23) is provided which is operatively connected on the input side to a steering encoder sensor (24) which detects the activation of the steering encoder (21), and is operatively connected on the output side to the electric steering element (25) in order to actuate same, **characterized in that** a hydraulic emergency steering circuit (60) is provided which has a hydraulic pump (61), as a master pump, which is arranged on the steering encoder (21), is operationally connected to the steering encoder (21) and is connected to a hydraulic slave actuator (62) which serves to steer the at least one steered wheel (6), wherein in the event of a failure of the electric steering device (20) the hydraulic emergency steering circuit (60) permits a steering operation of the at least one steered wheel (6), wherein the hydraulic pump (61) of the emergency steering circuit is embodied as a geared pump, in particular annular gear pump, and the hydraulic pump (61) of the hydraulic emergency steering circuit (60) and the electric steering encoder sensor (24) of the electric steering device (20) are arranged coaxially on the steering encoder (21), directly adjacent to a steering encoder hub (63) which supports the steering encoder (21) in a rotatable fashion.

2. Mobile work machine according to Claim 1, **characterized in that** the hydraulic emergency steering circuit (60) is embodied as a closed circuit, wherein the hydraulic pump (61) which is arranged on the steering encoder (21) and is driven by the steering encoder (21) is connected to the hydraulic slave actuator (62) in the closed circuit.

3. Mobile work machine according to Claim 1 or 2, **characterized in that** the hydraulic slave actuator (62) of the emergency steering circuit is embodied as a hydraulic motor (65) or hydraulic cylinder (31).

4. Mobile work machine according to one of Claims 1 to 3, **characterized in that** the closed circuit is provided with an overpressure projection device (70) and/or a feeder device (71) and/or a compensation tank (72) and/or a supply circuit.

5. Mobile work machine according to one of Claims 1 to 4, **characterized in that** the electric steering device (20) is embodied as a fully electric steering device in which the electric steering element (25) is embodied as an electric motor (27).

6. Mobile work machine according to one of Claims 1 to 4, **characterized in that** the electric steering device (20) is embodied as an electro-hydraulic steering device in which the electric steering element (25) is embodied as a hydraulic steering valve (26) which can be actuated electrically and is connected to a pressure medium source (36), a tank (38) and a hydraulic slave actuator (30) of the electro-hydraulic steering device.

7. Mobile work machine according to Claim 6, **characterized in that** the hydraulic slave actuator (62) of the hydraulic emergency steering circuit (60) is formed by the hydraulic slave actuator (31) of the electro-hydraulic steering device.

8. Mobile work machine according to Claim 6 or 7, **characterized in that** the hydraulic emergency steering circuit (60) has an operating pressure which is reduced compared to the electro-hydraulic steering device (20).

9. Mobile work machine according to one of Claims 1 to 8, **characterized in that** the emergency steering circuit (60) is provided with a control device (80) by means of which the emergency steering circuit (60) is deactivated in the case of a functionally capable electric steering device (20), and the emergency steering circuit (60) is activated in the event of failure of the electric steering device (20).

10. Mobile work machine according to Claim 9, **characterized in that** the steering device (80) has a coupling device (86) which controls the operational connection of the steering encoder (21) to the hydraulic pump (61) and is activated into a torque-transmitting connecting position by a spring device, and can be actuated into a torque-disconnecting disconnection position by an electric activation device.

11. Mobile work machine according to Claim 9, **characterized in that** the control device (80) has a short-circuit valve device (81) which is assigned to the pressure medium lines (64a, 64b) of the closed circuit of the emergency steering circuit (60) and can be activated by a spring device (82) into a first switched position (81a) for shutting off a short-circuit connection (84) of the emergency steering circuit (60), and by an electric activation device (83) into a second switched position (81b) for opening the short-circuit connection (84) of the emergency steering circuit (60).

12. Mobile work machine according to one of Claims 1 to 11, **characterized in that** the steering encoder (21) which is provided with the hydraulic pump (61) is arranged in a driver's workstation (10) of the work machine (1) above a leg room area (B) for an operator.

## Revendications

1. Engin mobile (1) configuré comme chariot-élévateur, présentant
un dispositif électrique de braquage (20) qui comprend un élément de braquage (25) apte à être actionné électriquement, qui fait braquer au moins une roue directrice (6) en fonction d'une commande de braquage (21), en particulier un volant (22),
un dispositif électronique de commande (23) dont l'entrée communique fonctionnellement avec un capteur (24) de commande de braquage qui saisit un actionnement de la commande de braquage (21) et dont la sortie communique fonctionnellement avec l'élément électrique de braquage (25) en vue de le commander,
**caractérisé en ce que**
un circuit hydraulique (60) de braquage de secours qui présente une pompe hydraulique (61) utilisée comme pompe matrice, disposée sur la commande de braquage (21) et reliée à entraînement à la commande de braquage (21), est reliée à un actionneur hydraulique asservi (62) qui sert à faire braquer la ou les roues motrices (6), le circuit hydraulique (60) de braquage de secours permettant un fonctionnement en braquage de la ou des roues directrices (6) en cas de défaillance du dispositif électrique de braquage (20),
**en ce que** la pompe hydraulique (61) du circuit de braquage de secours est configurée comme pompe à engrenages et en particulier comme pompe à engrenages annulaires,
**en ce que** la pompe hydraulique (61) du circuit hydraulique (60) de braquage de secours et le capteur électrique (24) de la commande de braquage du dispositif électrique de braquage (20) sont disposés coaxialement sur la commande de braquage (21), au voisinage immédiat d'un moyeu (63) de commande de braquage qui monte à rotation la commande de braquage (21).

2. Engin mobile selon à revendication 1, **caractérisé en ce que** le circuit hydraulique (60) de braquage de secours est configuré comme circuit fermé dans lequel la pompe hydraulique (61) disposée sur la commande de braquage (21) et entraînée par la commande de braquage (21) est reliée à l'actionneur hydraulique asservi (62) dans le circuit fermé.

3. Engin mobile selon les revendications 1 ou 2, **caractérisé en ce que** l'actionneur hydraulique asservi (62) du circuit de braquage de secours est configuré comme moteur hydraulique (65) ou vérin hydraulique (31).

4. Engin mobile selon l'une des revendications 1 à 3, **caractérisé en ce que** le circuit fermé est doté d'un dispositif (70) de protection contre les surpressions, d'un dispositif (71) de post-aspiration, d'un récipient d'équilibrage (72) et/ou d'un circuit de réserve.

5. Engin mobile selon l'une des revendications 1 à 4, **caractérisé en ce que** le dispositif électrique de braquage (20) est configuré comme dispositif de braquage complètement électrique dans lequel l'élément électrique de braquage (25) est configuré comme moteur électrique (27).

6. Engin mobile selon l'une des revendications 1 à 4, **caractérisé en ce que** le dispositif électrique de braquage (20) est configuré comme dispositif de braquage électro-hydraulique dans lequel l'élément électrique de braquage (25) est configuré comme soupape hydraulique de braquage (26) actionnée électriquement, qui communique avec une source (36) de fluide sous pression, un récipient (38) et un actionneur hydraulique asservi (30) du dispositif électro-hydraulique de braquage.

7. Engin mobile selon la revendication 6, **caractérisé en ce que** l'actionneur hydraulique asservi (62) du circuit hydraulique (60) de braquage de secours est formé par l'actionneur hydraulique asservi (31) du dispositif électro-hydraulique de braquage.

8. Engin mobile selon les revendications 6 ou 7, **caractérisé en ce que** le circuit hydraulique (60) de braquage de secours présente une pression de travail plus basse que celle du dispositif électro-hydraulique de braquage (20).

9. Engin mobile selon l'une des revendications 1 à 8, **caractérisé en ce que** le circuit (60) de braquage de secours est doté d'un dispositif de commande (80) au moyen duquel le circuit (60) de braquage de secours est désactivé lorsque le dispositif électrique de braquage (20) fonctionne correctement et le circuit (60) de braquage de secours est activé lorsque le dispositif électrique de braquage (20) présente une défaillance.

10. Engin mobile selon la revendication 9, **caractérisé en ce que** le dispositif de commande (80) présente un dispositif d'embrayage (86) qui commande la liaison d'entraînement entre la commande de braquage (21) et la pompe hydraulique (61), qui est amené par un dispositif à ressort dans une position de liaison qui transfère un couple de rotation et qui peut être amené par un dispositif électrique d'actionnement dans une position de débranchement qui débranche le couple de rotation.

11. Engin mobile selon la revendication 9, **caractérisé en ce que** le dispositif de commande (80) présente un dispositif (81) de soupape de court-circuit associée aux conduits (64a, 64b) de fluide sous pression du circuit fermé (60) de braquage de secours, qui peut être amené par un dispositif à ressort (82) dans une première position de commutation (81a) qui bloque la liaison de court-circuit (84) du circuit (60) de braquage de secours et par un dispositif électrique d'actionnement (83) dans une deuxième position de commutation (81b) qui ouvre la liaison (84) en court-circuit du circuit (60) de braquage de secours.

12. Engin mobile selon l'une des revendications 1 à 11, **caractérisé en ce que** la commande de braquage (21) dotée de la pompe hydraulique (61) est disposée à l'emplacement de travail (10) du conducteur de l'engin (1), au-dessus de l'espace (B) prévu pour les jambes de l'opérateur.
